(19) Europäisches Patentamt
European Patent Office
Office européen des brevets

(11) **EP 3 971 061 A1**

(12) **EUROPEAN PATENT APPLICATION**

(43) Date of publication:
**23.03.2022  Bulletin 2022/12**

(51) International Patent Classification (IPC):
***B62D 6/00*** *(2006.01)*     *B62D 6/02* *(2006.01)*

(21) Application number: **21196779.9**

(52) Cooperative Patent Classification (CPC):
**B62D 6/002;** B62D 6/02

(22) Date of filing: **15.09.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.09.2020  JP 2020156288**

(71) Applicants:
• **JTEKT CORPORATION**
**Aichi-ken, 448-8652 (JP)**
• **TOYOTA JIDOSHA KABUSHIKI KAISHA**
**Toyota-shi, Aichi-ken, 471-8571 (JP)**

(72) Inventors:
• **MIYAKE, Junya**
**Kariya-shi, Aichi-ken,, 448-8652 (JP)**
• **KODERA, Takashi**
**Kariya-shi, Aichi-ken,, 448-8652 (JP)**
• **TAKASHIMA, Toru**
**Toyota-shi, Aichi-ken,, 471-8571 (JP)**
• **TOYAMA, Hidetsugu**
**Toyota-shi, Aichi-ken,, 471-8571 (JP)**

(74) Representative: **Winter, Brandl - Partnerschaft mbB**
**Alois-Steinecker-Straße 22**
**85354 Freising (DE)**

(54) **STEERING DEVICE**

(57)     A steering device (10) includes: a turning shaft (31) that turns a turning wheel (12) of a vehicle, with dynamic power transmission being separated between the turning shaft (31) and a steering wheel (11); a turning motor (32); and a control device (36). The control device (36) executes a particular process for increasing a command value to a value larger than an original command value that depends on a steering state, in a particular situation where an axial force exceeding a design-based expectation is easily generated in the turning shaft (31).

FIG. 3A

## Description

BACKGROUND OF THE INVENTION

1. Field of the Invention

The invention relates to a steering device of a vehicle.

2. Description of Related Art

There is a so-called steer-by-wire steering device in which dynamic power transmission is separated between a steering wheel and turning wheels. For example, a steering device described in Japanese Unexamined Patent Application Publication No. 2014-133521 (JP 2014-133521 A) includes a reaction force motor that is a generation source of a steering reaction force to be given to a steering shaft and a turning motor that is a generation source of a turning force for turning the turning wheels. At the time of traveling of a vehicle, a control device for the steering device generates the steering reaction force through an electricity supply control of the reaction force motor, and turns the turning wheels through an electricity supply control of the turning motor.

SUMMARY OF THE INVENTION

In general steer-by-wire steering devices including the steering device in JP 2014-133521 A, when the steering wheel is operated by a driver, the turning wheels are turned while a force balance between the turning force that is generated by the turning motor and an axial force that is generated in a turning shaft is kept.

For the steering device, there can be a situation where an axial force exceeding a design-based expectation is generated. Examples of the situation include a situation where the vehicle travels in an overloaded state where baggage is loaded over a load weight specified as a precondition for design, and a situation where a brake operation is performed for a sudden braking by which a higher deceleration is generated in the vehicle. In such a situation, there is fear that it is difficult to smoothly turn the turning wheels.

The invention provides a steering device that makes it possible to more smoothly the turning wheels, even in the situation where the axial force exceeding the design-based expectation is generated.

A steering device according to an aspect of the invention includes: a turning shaft that turns a turning wheel of a vehicle, with dynamic power transmission being separated between the turning shaft and a steering wheel; a turning motor that generates a turning force, the turning force being a torque that is given to the turning shaft for turning the turning wheel; and a control device configured to control the turning motor based on a command value that is calculated depending on a steering state of the steering wheel. The control device is configured to execute a particular process for increasing the command value to a value larger than an original command value that depends on the steering state, in a particular situation where an axial force exceeding a design-based expectation is easily generated in the turning shaft.

With this configuration, in preparation for the situation where the axial force exceeding the design-based expectation is generated, the particular process for increasing the command value to the value larger than the original command value that depends on the steering state is executed in the particular situation. Therefore, even in the case where the axial force exceeding the design-based expectation is actually generated, since the command value is increased to the value larger than the original command value that depends on the steering state, the turning motor generates a turning force larger than an ordinary turning force corresponding to the command value calculated depending on the steering state. Accordingly, it is possible to smoothly turn the turning wheel with no lack of the turning force.

In the above steering device, the particular situation may be a situation where the vehicle is decelerating and is about to stop after start of the vehicle. As shown in the configuration, in the situation where the vehicle is decelerating and is about to stop after start of the vehicle, an excessive axial force is easily generated in the turning shaft. Therefore, in such a situation, it is preferable to execute the particular process for increasing the command value to the value larger than the original command value that depends on the steering state.

In the above steering device, the control device may be configured to multiply the original command value that depends on the steering state, by a gain, or add an additional value to the original command value that depends on the steering state, as the particular process.

With this configuration, in the particular situation where the axial force exceeding the design-based expectation is easily generated in the turning shaft, the command value is increased to the value larger than the original value that depends on the steering state, through the execution of the particular process. Thereby, the turning motor generates the turning force larger than the ordinary turning force corresponding to the command value calculated depending on the steering state. By previously increasing the turning force that is generated by the turning motor in preparation for the situation where the axial force exceeding the design-based expectation is generated in this way, it is possible to smoothly turn the turning wheel with no lack of the turning force, even in the case where the axial force exceeding the design-based expectation is actually generated.

In the above steering device, the control device may be configured to expand a change range of the command value by multiplying a restriction value that restricts the change range of the command value, by a gain, or adding an additional value to the restriction value, as the particular process.

With this configuration, in the situation where the axial force exceeding the design-based expectation is easily generated in the turning shaft, the change range of the command value is expanded beyond the restriction value that is a limit value of the change range, through the execution of the particular process. Therefore, even in the case where a command value larger than the restriction value is calculated due to the generation of the axial force exceeding the design-based expectation, the calculated command value is acceptable. The turning motor generates a larger turning force corresponding to the command value larger than the restriction value. By previously expanding the change range of the command value in preparation for the situation where the axial force exceeding the design-based expectation is generated in this way, it is possible to smoothly turn the turning wheel with no lack of the turning force, even in the case where the axial force exceeding the design-based expectation is actually generated.

In the above steering device, the command value may be a torque command value or a current command value for the turning motor that is calculated depending on the steering state of the steering wheel.

With the above aspect, it is possible to more smoothly turn the turning wheels, even in the situation where the axial force exceeding the design-based expectation is generated.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a configuration diagram showing a first embodiment of a steering device;
FIG. 2 is a block diagram of a control device in the first embodiment;
FIG. 3A is a block diagram showing a part of a turning control unit in the first embodiment;
FIG. 3B is a block diagram showing a part of a turning control unit in a second embodiment;
FIG. 4 is a graph showing a relation between a vehicle speed and the state of a flag in the first embodiment;
FIG. 5A is a block diagram showing a part of a turning control unit in a third embodiment; and
FIG. 5B is a block diagram showing a part of a turning control unit in a fourth embodiment.

DETAILED DESCRIPTION OF EMBODIMENTS

First Embodiment

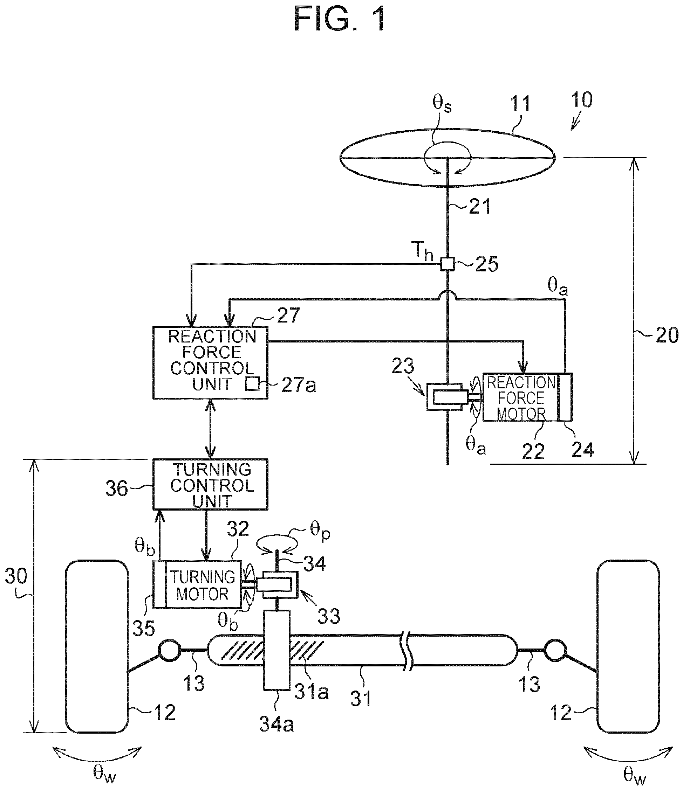

A first embodiment in which a steering device is embodied will be described below. As shown in FIG. 1, a steering device 10 of a vehicle includes a reaction force unit 20 that gives a steering reaction force to a steering wheel 11 of the vehicle and a turning unit 30 that turns turning wheels 12 of the vehicle. The steering reaction force is a torque that acts in the opposite direction of the direction of driver's operation of the steering wheel 11. By giving the steering reaction force to the steering wheel 11, it is possible to give a moderate hand response feeling to the driver.

The reaction force unit 20 includes a steering shaft 21 with which the steering wheel 11 is linked, a reaction force motor 22, a speed reducer 23, a rotation angle sensor 24, a torque sensor 25, and a reaction force control unit 27.

The reaction force motor 22 is a generation source of the steering reaction force. As the reaction force motor 22, for example, a three-phase brushless motor is employed. The reaction force motor 22 is linked with the steering shaft 21 through the speed reducer 23. The torque generated by the reaction force motor 22 is given to the steering shaft 21 as the steering reaction force.

The rotation angle sensor 24 is provided on the reaction force motor 22. The rotation angle sensor 24 detects a rotation angle $\theta_a$ of the reaction force motor 22. The torque sensor 25 is provided at a portion between the speed reducer 23 on the steering shaft 21 and the steering wheel 11. The torque sensor 25 detects a steering torque $T_h$ that is applied to the steering shaft 21 through a rotation operation of the steering wheel 11.

The reaction force control unit 27 calculates a steering angle $\theta_s$ that is the rotation angle of the steering shaft 21, based on the rotation angle $\theta_a$ of the reaction force motor 22 that is detected through the rotation angle sensor 24. The reaction force control unit 27 counts the rotation number on the basis of the rotation angle $\theta_a$ (referred to as a "motor neutral point", hereinafter) of the reaction force motor 22 that corresponds to a steering neutral position of the steering wheel 11. The reaction force control unit 27 calculates the steering angle $\theta_s$ of the steering wheel 11 by calculating an integrated angle that is an angle resulting from integrating the rotation angle $\theta_a$ using the motor neutral point as an origin point and multiplying the calculated integrated angle by a conversion factor based on the reduction ratio of the speed reducer 23. The motor neutral point is stored in the reaction force control unit 27 as steerage angle neutral point information.

The reaction force control unit 27 executes a reaction force control of generating a steering reaction force corresponding to the steering torque $T_h$ through a drive control of the reaction force motor 22. The reaction force control unit 27 calculates a target steering reaction force based on the steering torque $T_h$ detected through the torque sensor 25, and calculates a target steering angle of the steering wheel 11 based on the calculated target steering reaction force and the steering torque $T_h$. The reaction force control unit 27 evaluates the difference between the steering angle $\theta_s$ calculated based on the rotation angle $\theta_a$ of the reaction force motor 22 and the target steering angle, and controls the supply of electricity to the reaction force motor 22 such that the difference is eliminated. The reaction force control unit 27 performs a vector control of the reaction force motor 22, using the rotation angle $\theta_a$ of the reaction force motor 22 that is detected through the rotation angle sensor 24.

The turning unit 30 includes a turning shaft 31, a turning motor 32, a speed reducer 33, a pinion shaft 34, a rotation angle sensor 35, and a turning control unit 36. The turning shaft 31 extends along a vehicle width direction (a right-left direction in FIG. 1). Right and left turning wheels 12 are linked with both ends of the turning shaft 31 through tie rods 13.

The turning motor 32 is a generation source of a turning force. As the turning motor 32, for example, a three-phase brushless motor is employed. The turning motor 32 is linked with the pinion shaft 34 through the speed reducer 33. Pinion teeth 34a of the pinion shaft 34 engage with rack teeth 31a of the turning shaft 31. The torque generated by the turning motor 32 is given to the turning shaft 31 through the pinion shaft 34, as the turning force. The turning shaft 31 moves along the vehicle width direction (the right-left direction in FIG. 1), in response to the rotation of the turning motor 32. By the movement of the turning shaft 31, a turning angle $\theta_w$ of the turning wheels 12 is changed.

The rotation angle sensor 35 is provided on the turning motor 32. The rotation angle sensor 35 detects a rotation angle $\theta_b$ of the turning motor 32. The turning control unit 36 executes a turning control of turning the turning wheels 12 depending on a steering state through a drive control of the turning motor 32. The turning control unit 36 calculates a pinion angle $\theta_p$ that is the rotation angle of the pinion shaft 34, based on the rotation angle $\theta_b$ of the turning motor 32 that is detected through the rotation angle sensor 35. Further, the turning control unit 36 calculates a target pinion angle that is a target rotation angle of the pinion shaft 34, using the target steering angle that is calculated by the reaction force control unit 27. The target rotation angle of the pinion shaft 34 is calculated from a standpoint of achievement of a predetermined steerage angle ratio. The turning control unit 36 evaluates the difference between the target pinion angle of the pinion shaft 34 and an actual pinion angle $\theta_p$, and controls the supply of electricity to the turning motor 32 such that the difference is eliminated. The turning control unit 36 controls a vector control of the turning motor 32, using the rotation angle $\theta_b$ of the turning motor 32 that is detected through the rotation angle sensor 35.

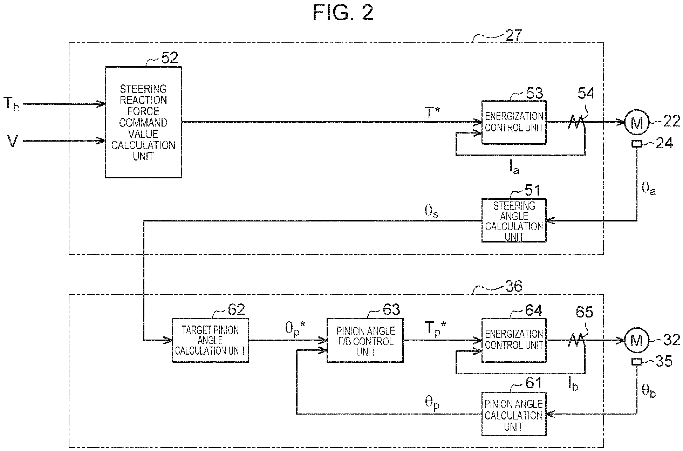

Next, the reaction force control unit 27 will be described in detail. As shown in FIG. 2, the reaction force control unit 27 includes a steering angle calculation unit 51, a steering reaction force command value calculation unit 52, and an energization control unit 53.

The steering angle calculation unit 51 calculates the steering angle $\theta_s$ of the steering wheel 11, based on the rotation angle $\theta_a$ of the reaction force motor 22 that is detected through the rotation angle sensor 24. The steering reaction force command value calculation unit 52 calculates a steering reaction force command value $T^*$ based on the steering torque $T_h$ and a vehicle speed V The steering reaction force command value calculation unit 52 calculates the steering reaction force command value $T^*$ such that the absolute value of the steering reaction force command value $T^*$ is larger as the absolute value of the steering torque $T_h$ is larger and the vehicle speed V is lower. The steering reaction force command value calculation unit 52 will be described later in detail.

The energization control unit 53 supplies an electric power corresponding to the steering reaction force command value $T^*$, to the reaction force motor 22. Specifically, the energization control unit 53 calculates a current command value for the reaction force motor 22, based on the steering reaction force command value $T^*$. Further, the energization control unit 53 detects the value of an actual current $I_a$ that is generated on an electricity supply path to the reaction force motor 22, through a current sensor 54 provided on the electricity supply path. The value of the current $I_a$ is the value of the actual current that is supplied to the reaction force motor 22. Then, the energization control unit 53 evaluates the deviation between the current command value and the value of the actual current $I_a$, and controls the supply of electricity to the reaction force motor 22 such that the deviation is eliminated. Thereby, the reaction force motor 22 generates a torque corresponding to the steering reaction force command value $T^*$. It is possible to give a moderate hand response feeling corresponding to a road surface reaction force, to the driver.

Next, the turning control unit 36 will be described in detail. As shown in FIG. 2, the turning control unit 36 includes a pinion angle calculation unit 61, a target pinion angle calculation unit 62, a pinion angle feedback control unit 63, and an energization control unit 64.

The pinion angle calculation unit 61 calculates the pinion angle $\theta_p$ that is an actual rotation angle of the pinion shaft 34, based on the rotation angle $\theta_b$ of the turning motor 32 that is detected through the rotation angle sensor 35. The turning motor 32 and the pinion shaft 34 coordinates through the speed reducer 33. Therefore, there is a correlation between the rotation angle $\theta_b$ of the turning motor 32 and the pinion angle $\theta_p$. Using the correlation, it is possible to evaluate the pinion angle $\theta_p$ from the rotation angle $\theta_b$ of the turning motor 32. Further, the pinion shaft 34 engages with the turning shaft 31. Therefore, there is a correlation between the pinion angle $\theta_p$ and the movement amount of the turning shaft 31. That is, the pinion angle $\theta_p$ is a value that reflects the turning angle $\theta_w$ of the turning wheels 12.

The target pinion angle calculation unit 62 calculates a target pinion angle $\theta_p^*$ based on the steering angle $\theta_s$ that is calculated by the steering angle calculation unit 51. In the embodiment, the target pinion angle calculation unit 62 sets the target pinion angle $\theta_p^*$ to the same value as the steering angle $\theta_s$. That is, the steerage angle ratio that is the ratio between the steering angle $\theta_s$

and the turning angle $\theta_w$ is "1:1".

The target pinion angle calculation unit 62 may set the target pinion angle $\theta_p{}^*$ to a different value from the steering angle $\theta_s$. That is, the target pinion angle calculation unit 62 sets the steerage angle ratio that is the ratio of the turning angle $\theta_w$ to the steering angle $\theta_s$, depending on a vehicle traveling state such as the vehicle speed V, for example, and calculates the target pinion angle $\theta_p{}^*$ depending on the set steerage angle ratio. The target pinion angle calculation unit 62 calculates the target pinion angle $\theta_p{}^*$, such that the turning angle $\theta_w$ relative to the steering angle $\theta_s$ is larger as the vehicle speed V is lower and such that the turning angle $\theta_w$ relative to the steering angle $\theta_s$ is smaller as the vehicle speed V is higher. For realizing the steerage angle ratio that is set depending on the vehicle traveling state, the target pinion angle calculation unit 62 calculates a correction angle for the steering angle $\theta_s$, and calculates the target pinion angle $\theta_p{}^*$ depending on the steerage ratio, by adding the calculated correction angle to the steering angle $\theta_s$.

The pinion angle feedback control unit 63 takes in the target pinion angle $\theta_p{}^*$ calculated by the target pinion angle calculation unit 62 and the actual pinion angle $\theta_p$ calculated by the pinion angle calculation unit 61. The pinion angle feedback control unit 63 calculates a torque command value $T_p{}^*$ for the torque that is generated by the turning motor 32, through a feedback control of the pinion angle $\theta_p$ for causing the actual pinion angle $\theta_p$ to follow the target pinion angle $\theta_p{}^*$.

The energization control unit 64 supplies an electric power corresponding to the torque command value $T_p{}^*$, to the turning motor 32. Specifically, the energization control unit 64 calculates a current command value for the turning motor 32, based on the torque command value $T_p{}^*$. Further, the energization control unit 64 detects the value of an actual current $I_b$ that is generated on an electricity supply path to the turning motor 32, through a current sensor 65 provided on the electricity supply path. The value of the current $I_b$ is the value of the actual current that is supplied to the turning motor 32. Then, the energization control unit 64 evaluates the deviation between the current command value and the value of the actual current $I_b$, and controls the supply of electricity to the turning motor 32 such that the deviation is eliminated. Thereby, the turning motor 32 rotates by an angle corresponding to the torque command value $T_p{}^*$.

In the steer-by-wire steering device 10, in the case where the steering wheel 11 is operated by the driver, the turning wheels 12 are turned while a force balance between the turning force that is generated by the turning motor 32 and an axial force that acts on the turning shaft 31 is kept. However, for example, in the case where the vehicle travels in an overloaded state or in the case where a brake operation for obtaining a sudden braking is performed, there is concern that an axial force exceeding a design-based expectation is generated in the steering device 10. In this case, there is fear that it is difficult to smoothly turn the turning wheels 12.

Hence, in the embodiment, the following configuration is employed as the turning control unit 36, for more smoothly turning the turning wheels 12, even in the case where the axial force exceeding the design-based expectation is generated.

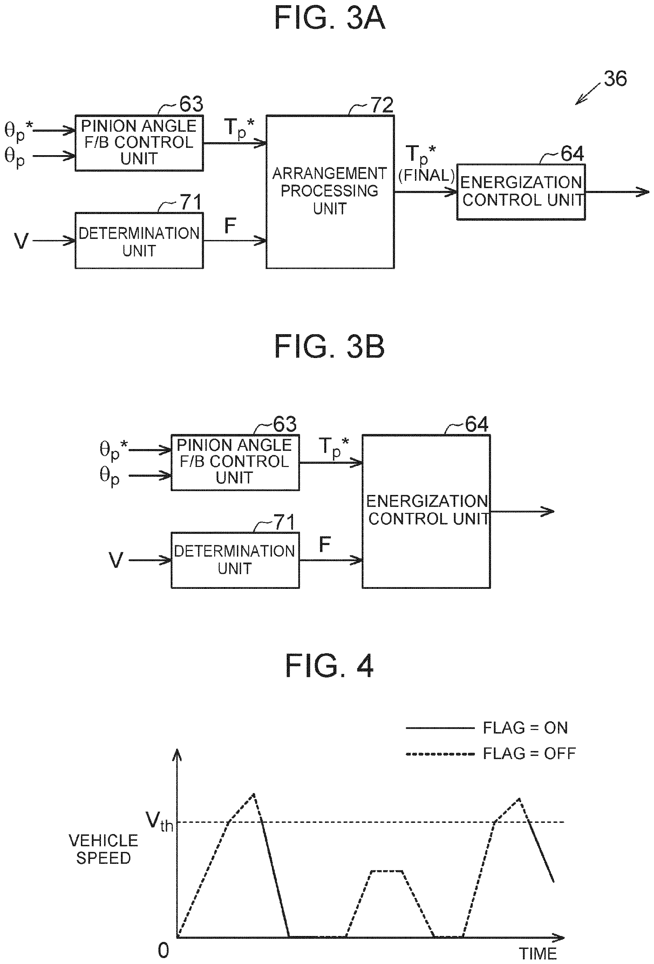

As shown in FIG. 3A, the turning control unit 36 includes a determination unit 71 and an arrangement processing unit 72, in addition to the pinion angle calculation unit 61 (not illustrated), a target pinion angle calculation unit 62 (not illustrated), a pinion angle feedback control unit 63, and the energization control unit 64 described above.

The determination unit 71 sets the value of a flag F depending on the vehicle speed V that is detected through a vehicle speed sensor. The flag F indicates information of whether the traveling situation of the vehicle is a situation where the axial force exceeding the design-based expectation is easily generated in the turning shaft 31.

As shown in a graph of FIG. 4, when the value of the vehicle speed V reaches a vehicle speed threshold value $V_{th}$ by increase from "0", the determination unit 71 determines that the start of the vehicle is completed. The determination unit 71 determines that the vehicle is in the stop state, in a period after the increase in the value of the vehicle speed V from "0" is started and before the value of the vehicle speed V reaches the vehicle speed threshold value $V_{th}$. The determination unit 71 also determines that the vehicle is in the stop state, when the value of the vehicle speed V begins to decrease before the value of the vehicle speed V reaches the vehicle speed threshold value $V_{th}$, after the increase in the value of the vehicle speed V from "0" is started.

The vehicle speed threshold value $V_{th}$ is set on the basis of an extremely low speed (for example, 5 km/h). This is because it can be said that the situation where the vehicle is in the stop state or the situation where the vehicle travels at an extremely low speed is a situation where the axial force exceeding the design-based expectation is easily generated by the operation of the steering wheel 11 in combination with the overload or the like.

In a period during which it is determined that the vehicle is in the stop state and in a period after it is determined that the start of the vehicle is completed and before the value of the vehicle speed V decreases to the vehicle speed threshold value $V_{th}$, the determination unit 71 turns the flag F off, that is, the determination unit 71 sets the value of the flag F to "0". Further, after it is determined that the start of the vehicle is completed, in a period after the value of the vehicle speed V starts to decrease and reaches the vehicle speed threshold value $V_{th}$ and before the value of the vehicle speed V becomes "0", the determination unit 71 turns the flag F on, that is, the determination unit 71 sets the value of the flag F to "1".

When the value of the flag F set by the determination unit 71 is "0", the arrangement processing unit 72 supplies the torque command value $T_p{}^*$ calculated by the pinion angle feedback control unit 63, to the energization control unit 64, as the final torque command value $T_p{}^*$. The energization control unit 64 supplies an electric power corresponding to the final torque command value $T_p{}^*$, to the turning motor 32.

When the value of the flag F set by the determination unit 71 is "1", the arrangement processing unit 72 executes the following process as a process for increasing the torque command value $T_p{}^*$ calculated by the pinion angle feedback control unit 63.

That is, the arrangement processing unit 72 calculates the final torque command value $T_p{}^*$, by multiplying the torque command value $T_p{}^*$ calculated by the pinion angle feedback control unit 63, by a gain $G_{en}$, as expressed by Expression (A).

$$T_p{}^* \text{(final)} = T_p{}^* \cdot G_{en} \ ... \ (A)$$

Here, the value of the gain $G_{en}$ is set to a value larger than "1", from a standpoint of keeping of the force balance between the axial force exceeding the design-based expectation that is generated due to the overload of baggage or the like and the turning force that is generated by the turning motor 32. The value of the gain $G_{en}$ is set through a simulation based on possible load situations and traveling situations. Therefore, the final torque command value $T_p{}^*$ is a value larger than the torque command value $T_p{}^*$ calculated by the pinion angle feedback control unit 63.

The arrangement processing unit 72 supplies the final torque command value $T_p{}^*$ calculated based on Expression (A), to the energization control unit 64. The energization control unit 64 supplies an electric power corresponding to the final torque command value $T_p{}^*$, to the turning motor 32. The final torque command value $T_p{}^*$ is a value larger than the torque command value $T_p{}^*$ calculated by the pinion angle feedback control unit 63. Therefore, the amount of the current that is supplied to the turning motor 32 is larger than an ordinary amount of the current corresponding to the torque command value $T_p{}^*$ calculated by the pinion angle feedback control unit 63. Accordingly, the turning force that is generated by the turning motor 32 increases due to the increase in the amount of the current that is supplied to the turning motor 32.

When the value of the flag F set by the determination unit 71 is "1", the arrangement processing unit 72 may calculate the final torque command value $T_p{}^*$, by adding an additional value $T_{se}$ to the torque command value $T_p{}^*$ calculated by the pinion angle feedback control unit 63, as expressed by Expression (B)

$$T_p{}^* \text{(final)} = T_p{}^* + T_{se} \ ... \ (B)$$

Here, the additional value $T_{se}$ is set from a standpoint of keeping of the force balance between the axial force exceeding the design-based expectation that is generated due to the overload of baggage or the like and the turning force that is generated by the turning motor 32. The additional value $T_{se}$ is set through a simulation based on possible load situations and traveling situations.

Also by the addition of the additional value $T_{se}$, it is possible to increase the final torque command value $T_p{}^*$ to a value larger than the torque command value $T_p{}^*$ calculated by the pinion angle feedback control unit 63, in the situation where the axial force exceeding the design-based expectation is easily generated. Furthermore, it is possible to increase the turning force that is generated by the turning motor 32, to a force larger than the turning force corresponding to the ordinary torque command value $T_p{}^*$ calculated by the pinion angle feedback control unit 63.

Accordingly, with the first embodiment, it is possible to obtain the following effect. (1) When it is determined that the traveling situation of the vehicle is a situation where the axial force exceeding the design-based expectation is easily generated based on the vehicle speed that is a state variable indicating the traveling situation of the vehicle, the torque command value $T_p{}^*$ is increased to a value larger than the ordinary torque command value $T_p{}^*$ calculated by the pinion angle feedback control unit 63. Thereby, the turning motor 32 generates a turning force larger than the turning force corresponding to the ordinary torque command value $T_p{}^*$ calculated by the pinion angle feedback control unit 63. By previously increasing the turning force that is generated by the turning motor 32 in preparation for the situation where the axial force exceeding the design-based expectation is generated in this way, it is possible to smoothly turn the turning wheels 12 with no lack of the turning force, even in the case where the axial force exceeding the design-based expectation is actually generated.

Second Embodiment

Next, a second embodiment in which the steering device is embodied will be described. The embodiment is different from the first embodiment in that the energization control unit 64 has the same processing function as the processing function of the above-described arrangement processing unit 72. In the embodiment, a configuration in which the above-described arrangement processing unit 72 is excluded is employed as the configuration of the turning control unit 36.

As shown in FIG. 3B, the energization control unit 64 takes in the value of the flag F set by the determination unit 71. Further, the energization control unit 64 takes in the torque command value $T_p{}^*$ calculated by the pinion angle feedback control unit 63, as the final torque command value $T_p{}^*$.

When the value of the flag F set by the determination unit 71 is "1", the energization control unit 64 calculates the final current command value $I^*$, by multiplying a current command value I* for the turning motor 32 that is calculated based on the torque command value $T_p{}^*$ calculated by the pinion angle feedback control unit 63, by a gain $G_{en}$, as expressed by Expression (C).

$$I^*(\text{final}) = I^* \cdot G_{en} \ldots (C)$$

Thereby, in the situation where the axial force exceeding the design-based expectation is easily generated, it is possible to increase the final current command value I* to a value larger than the current command value I* corresponding to the ordinary torque command value $T_p{}^*$ calculated by the pinion angle feedback control unit 63. Furthermore, it is possible to increase the turning force generated by the turning motor 32, to a force larger than the turning force corresponding to the ordinary torque command value $T_p{}^*$ calculated by the pinion angle feedback control unit 63.

Further, in the case where the energization control unit 64 has the same processing function as the processing function of the arrangement processing unit 72, when the value of the flag F set by the determination unit 71 is "1", the energization control unit 64 may calculate the final current command value I*, by adding an additional value $I_{se}$ to the current command value I* for the turning motor 32 that is calculated based on the torque command value $T_p{}^*$ calculated by the pinion angle feedback control unit 63, as expressed by Expression (D).

$$I^*(\text{final}) = I^* + I_{se} \ldots (D)$$

Also by the addition of the additional value $I_{se}$, it is possible to increase the final current command value I* to a value larger than the current command value I* corresponding to the torque command value $T_p{}^*$ calculated by the pinion angle feedback control unit 63, in the situation where the axial force exceeding the design-based expectation is easily generated. Furthermore, it is possible to increase the turning force that is generated by the turning motor 32, to a force larger than the turning force corresponding to the ordinary torque command value $T_p{}^*$ calculated by the pinion angle feedback control unit 63.

Accordingly, with the second embodiment, it is possible to obtain the following effect. (2) When it is determined that the traveling situation of the vehicle is a situation where the axial force exceeding the design-based expectation is easily generated based on the vehicle speed that is a state variable indicating the traveling situation of the vehicle, the current command value I* is increased to a value larger than an ordinary current command value corresponding to the torque command value $T_p{}^*$ calculated by the pinion angle feedback control unit 63. Thereby, the turning motor 32 generates a turning force larger than the turning force corresponding to the ordinary torque command value $T_p{}^*$ calculated by the

pinion angle feedback control unit 63. By previously increasing the turning force that is generated by the turning motor 32 in preparation for the situation where the axial force exceeding the design-based expectation is generated in this way, it is possible to smoothly turn the turning wheels 12 with no lack of the turning force, even in the case where the axial force exceeding the design-based expectation is actually generated.

Third Embodiment

Next, a third embodiment in which the steering device is embodied will be described. The embodiment basically has the same configuration as the above first embodiment shown in FIG. 1 and FIG. 2. Therefore, members and constituents identical to members and constituents in the first embodiment are denoted by the identical reference characters, and detailed descriptions therefor are omitted.

For the steering device 10, there can be a situation where it is difficult to turn the turning wheels 12 to a steering increase side or a steering return side, for example, a situation where the turning wheel butts against a curbstone at the time of a stationary steering. At this time, the turning control unit 36 controls the turning angle of the turning wheels 12 such that the turning angle follows the steering angle $\theta_s$ of the steering wheel 11. Therefore, there is fear that an excessive current is supplied to the turning motor 32. Hence, the embodiment has the following configuration as the turning control unit 36.

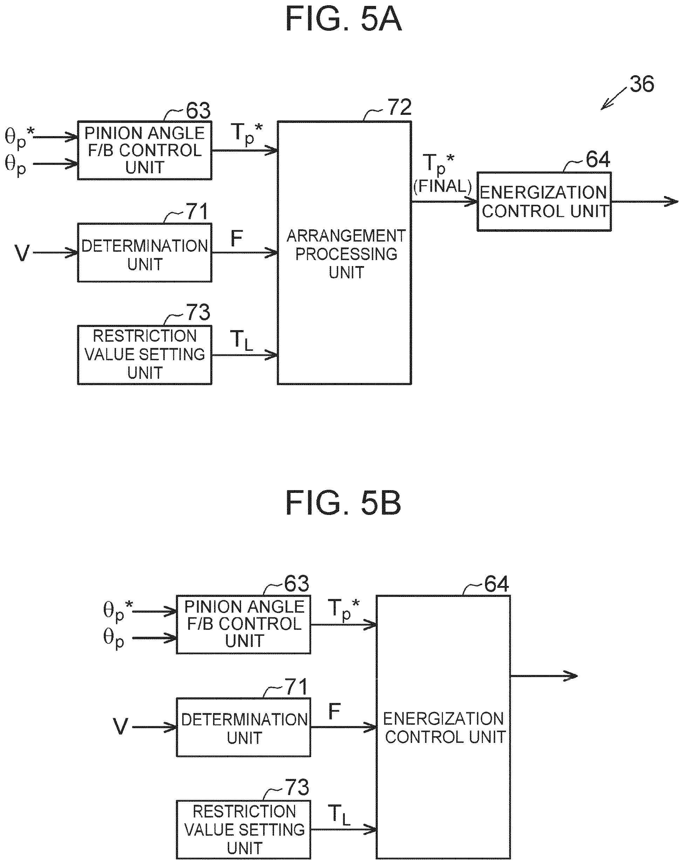

As shown in FIG. 5A, the turning control unit 36 includes a restriction value setting unit 73, in addition to the pinion angle calculation unit 61 (not illustrated), the target pinion angle calculation unit 62 (no illustrated), the pinion angle feedback control unit 63, the energization control unit 64, the determination unit 71, and the arrangement processing unit 72 described above.

The restriction value setting unit 73 sets a restriction value $T_L$ for restricting the change range of the torque command value $T_p{}^*$ that is calculated by the pinion angle feedback control unit 63. The restriction value $T_L$ is a limit value of an acceptable range in which the change in the torque command value $T_p{}^*$ is acceptable. The restriction value $T_L$ is set such that an excessive current is avoided from being supplied to the turning motor 32 based on an excessive torque command value $T_p{}^*$ and further an excessive torque is avoided from being generated by the turning motor 32 even in the case where the excessive torque command value $T_p{}^*$ is calculated for some reason. In the embodiment, the restriction value $T_L$ is set as a fixed value that is stored in a storage device of the turning control unit 36. For example, the restriction value $T_L$ is set to about 80% of the maximum value (100%) of the torque command value $T_p{}^*$ that corresponds to the maximal torque that can be generated by the turning motor 32.

The arrangement processing unit 72 restricts the change rage of the torque command value $T_p{}^*$ that

is calculated by the pinion angle feedback control unit 63, based on the restriction value $T_L$ set by the restriction value setting unit 73. When the absolute value of the torque command value $T_p{}^*$ is larger than the restriction value $T_L$, the torque command value $T_p{}^*$ is restricted to the restriction value $T_L$. For example, in the case where the torque command value $T_p{}^*$ is a positive value, when the value of the torque command value $T_p{}^*$ is larger than a positive restriction value $T_L$, the torque command value $T_p{}^*$ is restricted to the positive restriction value $T_L$. In the case where the torque command value $T_p{}^*$ is a negative value, when the torque command value $T_p{}^*$ is smaller than a negative restriction value $T_L$, the torque command value $T_p{}^*$ is restricted to a negative restriction value $T_L$. Accordingly, the turning motor 32 is avoided from generating an excessive torque based on an excessive torque command value $T_p{}^*$ beyond the limit value of the acceptable range.

When the value of the flag F set by the determination unit 71 is "1", that is, in the situation where the axial force exceeding the design-based expectation is easily generated, the arrangement processing unit 72 increases the absolute value of the restriction value $T_L$.

For example, the arrangement processing unit 72 calculates the final restriction value $T_L$, by multiplying the restriction value $T_L$ set by the restriction value setting unit 73, by a gain $G_{en}$, as expressed by Expression (E). Here, the gain $G_{en}$ is a fixed value larger than " 1".

$$T_L(final) = T_L \cdot G_{en} \ ... \ (E)$$

Thereby, in the situation where the axial force exceeding the design-based expectation is easily generated, it is possible to increase the final restriction value $T_L$ to a value larger than the restriction value $T_L$ that is stored in the storage device and that is ordinarily used. That is, the change range of the torque command value $T_p{}^*$ is expanded depending on the value of the gain $G_{en}$.

When the value of the flag F set by the determination unit 71 is "1", the arrangement processing unit 72 may calculate the final restriction value $T_L$, by adding an additional value $T_{se}$ to the restriction value $T_L$ set by the restriction value setting unit 73, as expressed by Expression (F).

$$T_L(final) = T_L + T_{se} \ ... \ (F)$$

Also by the addition of the additional value $T_{se}$, it is possible to increase the final restriction value $T_L$ to a value larger than the restriction value $T_L$ that is stored in the storage device and that is ordinarily used, in the situation where the axial force exceeding the design-based expectation is easily generated. That is, the change range of the torque command value $T_p{}^*$ is expanded by the additional value $T_{se}$.

In the case where the axial force exceeding the design-based expectation is generated in the steering device 10, there can be a situation where it is difficult to turn the turning wheels 12, similarly to the case where the turning wheel butts against a curbstone at the time of the stationary steering. At this time, the turning control unit 36 controls the turning angle of the turning wheels 12 such that the turning angle follows the steering angle $\theta_s$ of the steering wheel 11. Therefore, there is fear that the turning control unit 36 calculates a torque command value $T_p{}^*$ larger than the restriction value $T_L$ stored in the storage device such that a larger current is supplied to the turning motor 32.

In this regard, with the embodiment, in the case where the axial force exceeding the design-based expectation is generated, the restriction value $T_L$ that is finally used is altered to a value larger than the restriction value $T_L$ stored in the storage device, so that the change range of the torque command value $T_p{}^*$ is expanded. Thereby, the torque command value $T_p{}^*$ can exceed the restriction value $T_L$ stored in the storage device. Therefore, the amount of the current that is supplied to the turning motor 32 becomes larger compared to the case where the torque command value $T_p{}^*$ is restricted to the restriction value $T_L$ stored in the storage device. Accordingly, the turning force that is generated by the turning motor 32 increases due to the increase in the amount of the current that is supplied to the turning motor 32.

Accordingly, with the third embodiment, it is possible to obtain the following effect. (3) When it is determined that the traveling situation of the vehicle is a situation where the axial force exceeding the design-based expectation is easily generated based on the vehicle speed that is a state variable indicating the traveling situation of the vehicle, the change range of the torque command value $T_p{}^*$ that is calculated by the pinion angle feedback control unit 63 is expanded beyond the restriction value $T_L$ that is the limit value of the change range. Therefore, even in the case where a torque command value $T_p{}^*$ larger than the restriction value $T_L$ set by the restriction value setting unit 73 is calculated due to the generation of the axial force exceeding the design-based expectation, the calculated torque command value $T_p{}^*$ is acceptable. The turning motor 32 generates a larger turning force corresponding to the torque command value $T_p{}^*$ larger than the restriction value $T_L$. By previously expanding the change range of the torque command value $T_p{}^*$ in preparation for the situation where the axial force exceeding the design-based expectation is generated in this way, it is possible to smoothly turn the turning wheels 12 with no lack of the turning force, even in the case where the axial force exceeding the design-based expectation is actually generated.

Fourth Embodiment

Next, a fourth embodiment in which the steering device is embodied will be described. The embodiment is different from the third embodiment in that the energization control unit 64 has the same processing function as the processing function of the above-described arrangement processing unit 72. In the embodiment, a configuration in which the above-described arrangement processing unit 72 is excluded is employed as the configuration of the turning control unit 36.

As shown in FIG. 5B, the energization control unit 64 takes in the value of the flag F set by the determination unit 71. Further, the energization control unit 64 takes in the torque command value $T_p^*$ calculated by the pinion angle feedback control unit 63, as the final torque command value $T_p^*$.

The restriction value setting unit 73 sets a restriction value IL for restricting the change range of the current command value I* that is calculated by the energization control unit 64. The energization control unit 64 takes in the restriction value $I_L$ set by the restriction value setting unit 73.

When the value of the flag F set by the determination unit 71 is "1", that is, in the situation where the axial force exceeding the design-based expectation is easily generated, the energization control unit 64 increases the absolute value of the restriction value $I_L$.

For example, the energization control unit 64 calculates the final restriction value $I_L$, by multiplying the restriction value $I_L$ set by the restriction value setting unit 73, by a gain $G_{en}$, as expressed by Expression (G). Here, the gain $G_{en}$ is a fixed value larger than " 1".

$$I_L(\text{final}) = I_L \cdot G_{en} \ ... \ (G)$$

Thereby, in the situation where the axial force exceeding the design-based expectation is easily generated, it is possible to increase the final restriction value IL to a value larger than the restriction value IL that is stored in the storage device and that is ordinarily used. That is, the change range of the current command value I* is expanded depending on the value of the gain $G_{en}$. Thereby, the current command value I* can exceed the restriction value IL stored in the storage device. Therefore, the amount of the current that is supplied to the turning motor 32 becomes larger compared to the case where the current command value I* is restricted to the restriction value IL stored in the storage device. Accordingly, the turning force that is generated by the turning motor 32 increases due to the increase in the amount of the current that is supplied to the turning motor 32.

When the value of the flag F set by the determination unit 71 is "1", the energization control unit 64 may calculate the final restriction value IL, by adding an additional value $I_{se}$ to the restriction value IL set by the restriction value setting unit 73, as expressed by Expression (H).

$$I_L(\text{final}) = I_L + I_{se} \ ... \ (H)$$

Also by the addition of the additional value $I_{se}$, in the situation where the axial force exceeding the design-based expectation is easily generated, it is possible to increase the final restriction value IL to a value larger than the restriction value IL that is stored in the storage device and that is ordinarily used. That is, the change range of the current command value I* is expanded by the additional value $I_{se}$.

Accordingly, with the fourth embodiment, it is possible to obtain the following effect. (4) When it is determined that the traveling situation of the vehicle is a situation where the axial force exceeding the design-based expectation is easily generated based on the vehicle speed that is a state variable indicating the traveling situation of the vehicle, the change range of the current command value I* that is calculated by the energization control unit 64 is expanded beyond the restriction value IL that is the limit value of the change range. Therefore, even in the case where a current command value I* larger than the restriction value IL set by the restriction value setting unit 73 is calculated due to the generation of the axial force exceeding the design-based expectation, the calculated current command value I* is acceptable. The turning motor 32 generates a larger turning force corresponding to the current command value I* larger than the restriction value IL. By previously expanding the change range of the current command value I* in preparation for the situation where the axial force exceeding the design-based expectation is generated in this way, it is possible to smoothly turn the turning wheels 12 with no lack of the turning force, even in the case where the axial force exceeding the design-based expectation is actually generated.

Other Embodiments

The embodiments may be carried out while being modified as follows. For example, the restriction value setting unit 73 may alter the value of the gain $G_{en}$ and the additional value $T_{se}$, $I_{se}$, depending on the vehicle speed V

The reaction force control unit 27 and the turning control unit 36 may constitute a single control device. In embodiments, a so-called linkless structure in which the dynamic power transmission is separated between the steering shaft 21 and the turning wheels 12 is employed as the steering device 10 of the vehicle. However, a structure in which the dynamic power transmission can be separated between the steering shaft 21 and the turning wheels 12 by a clutch may be employed. When the clutch is disconnected, the dynamic power transmission is separated between the steering wheel 11 and the turning wheels 12. When the clutch is connected, the dynamic power transmission is performed between the steering wheel 11 and the turning wheels 12.

**Claims**

1.  A steering device (10) **characterized by** comprising:

    a turning shaft (31) that turns a turning wheel (12) of a vehicle, with dynamic power transmission being separated between the turning shaft (31) and a steering wheel (11); a turning motor (32) that generates a turning force, the turning force being a torque that is given to the turning shaft (31) for turning the turning wheel (12); and a control device (36) configured to control the turning motor (32) based on a command value that is calculated depending on a steering state of the steering wheel (11), wherein the control device (36) is configured to execute a particular process for increasing the command value to a value larger than an original command value that depends on the steering state, in a particular situation where an axial force exceeding a design-based expectation is easily generated in the turning shaft (31).

2.  The steering device (10) according to claim 1, **characterized in that** the particular situation is a situation where the vehicle is decelerating and is about to stop after start of the vehicle.

3.  The steering device (10) according to claim 1 or 2, **characterized in that** the control device (36) is configured to multiply the original command value that depends on the steering state, by a gain, or add an additional value to the original command value that depends on the steering state, as the particular process.

4.  The steering device (10) according to claim 1 or 2, **characterized in that** the control device (36) is configured to expand a change range of the command value by multiplying a restriction value that restricts the change range of the command value, by a gain, or adding an additional value to the restriction value, as the particular process.

5.  The steering device (10) according to any one of claims 1 to 4, **characterized in that** the command value is a torque command value or a current command value for the turning motor (32) that is calculated depending on the steering state of the steering wheel (11).

# FIG. 1

FIG. 2

# FIG. 3A

# FIG. 3B

# FIG. 4

# FIG. 5A

36

$\theta_p{}^*$ → PINION ANGLE F/B CONTROL UNIT (63) → $T_p{}^*$ → ARRANGEMENT PROCESSING UNIT (72) → $T_p{}^*$ (FINAL) → ENERGIZATION CONTROL UNIT (64) →
$\theta_p$ →

V → DETERMINATION UNIT (71) → F →

RESTRICTION VALUE SETTING UNIT (73) → $T_L$ →

# FIG. 5B

$\theta_p{}^*$ → PINION ANGLE F/B CONTROL UNIT (63) → $T_p{}^*$ → ENERGIZATION CONTROL UNIT (64) →
$\theta_p$ →

V → DETERMINATION UNIT (71) → F →

RESTRICTION VALUE SETTING UNIT (73) → $T_L$ →

Europäisches
Patentamt

European
Patent Office

Office européen
des brevets

# EUROPEAN SEARCH REPORT

Application Number

EP 21 19 6779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 101 21 873 A1 (SAUER DANFOSS HOLDING AS NORDB [DK]) 21 November 2002 (2002-11-21) * claim 1; figure 1 * * paragraphs [0003], [0005], [0006], [0007], [0008], [0010], [0014], [0026], [0029] * | 1-5 | INV. B62D6/00 ADD. B62D6/02 |
| X | US 2020/023892 A1 (HONG SEUNGGYU [KR]) 23 January 2020 (2020-01-23) * claim 1; figures 1-7 * * paragraphs [0082], [0084], [0092], [0095], [0099], [0100] * | 1-5 | |
| A | US 2019/100241 A1 (KUDO YOSHIO [JP]) 4 April 2019 (2019-04-04) * claim 1; figures 1-8 * * paragraph [0054] * | 1 | |

| | |
|---|---|
| | TECHNICAL FIELDS SEARCHED (IPC) |
| | B62D |

The present search report has been drawn up for all claims

| Place of search | Date of completion of the search | Examiner |
|---|---|---|
| The Hague | 26 January 2022 | Altmann, Bernhard |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

**EP 21 19 6779**

This annex lists the patent family members relating to the patent documents cited in the above-mentioned European search report.
The members are as contained in the European Patent Office EDP file on
The European Patent Office is in no way liable for these particulars which are merely given for the purpose of information.

**26-01-2022**

| Patent document cited in search report | | Publication date | Patent family member(s) | | Publication date |
|---|---|---|---|---|---|
| DE 10121873 | A1 | 21-11-2002 | DE | 10121873 A1 | 21-11-2002 |
| | | | WO | 02094635 A1 | 28-11-2002 |
| US 2020023892 | A1 | 23-01-2020 | CN | 110733562 A | 31-01-2020 |
| | | | DE | 102019210685 A1 | 23-01-2020 |
| | | | KR | 20200009810 A | 30-01-2020 |
| | | | US | 2020023892 A1 | 23-01-2020 |
| US 2019100241 | A1 | 04-04-2019 | CN | 109591883 A | 09-04-2019 |
| | | | DE | 102018216565 A1 | 04-04-2019 |
| | | | US | 2019100241 A1 | 04-04-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014133521 A